# EUROPÄISCHE PATENTSCHRIFT

(11) **EP 3 661 716 B1**
(45) Veröffentlichungstag und Bekanntmachung des Hinweises auf die Patenterteilung: **22.06.2022**
(21) Anmeldenummer: 18750200.0
(22) Anmeldetag: 03.08.2018
(51) Int. Cl.: B29C 33/00, B29C 44/34, B29C 45/76

(54) **DICHTUNGSSYSTEM SOWIE FORMWERKZEUG**
SEALING SYSTEM AND MOLDING TOOL
SYSTÈME D'ÉTANCHÉITÉ AINSI QU'OUTIL DE MOULAGE

(30) Priorität: 03.08.2017 DE 102017213494
(43) Veröffentlichungstag der Anmeldung: 10.06.2020
(73) Patentinhaber: FRIMO Group GmbH, 49504 Lotte (DE)
(72) Erfinder: LAUSE, Jürgen, 49205 Hasbergen (DE); HUSTER, Hermann, 49186 Bad Iburg (DE)
(74) Vertreter: Hoffmann Eitle
(86) Internationale Anmeldenummer: PCT/EP2018/071153
(87) Internationale Veröffentlichungsnummer: WO 2019/025598

(56) Entgegenhaltungen:
- EP-A1- 2 907 643
- EP-A1- 2 907 643
- US-A1- 2002 168 438
- US-A1- 2002 168 438
- US-A1- 2018 236 705

## Beschreibung

### Technisches Gebiet

Die Erfindung betrifft ein Dichtungssystem zum Abdichten benachbarter Maschinenteile, insbesondere Formwerkzeugteile zum Schäumen von Fahrzeugteilen. Ferner betrifft die vorliegende Erfindung ein Formwerkzeug sowie eine Verwendung.

### Stand der Technik

Im Bereich der Automobilzulieferindustrie werden verschiedene Bauteile für Fahrzeuge mit einem Schäumverfahren hergestellt, bei dem ein Schaummaterial, insbesondere ein Polyurethan-Schaummaterial, in einen Formhohlraum eines Formwerkzeugs eingespritzt wird oder in die offene Kavität eingefüllt wird. Im Formhohlraum ist bereits ein formstabiler Träger und ein Oberflächenmaterial eingebracht. Im Zuge des Schäumvorgangs wird der formstabile Träger mit dem Oberflächenmaterial verbunden.

Da das eingebrachte Schaummaterial beim Einbringen in den Formhohlraum zunächst relativ dünnflüssig ist, umfassen die genannten Formwerkzeuge eine oder mehrere Dichteinrichtungen, um zu verhindern, dass das Schaummaterial aus dem Formwerkzeug austritt. Die Dichteinrichtungen werden dabei so an einem Formwerkzeugteil angeordnet, dass diese das auszubildende Bauteil umschließen. Die Dichteinrichtung weist einen oder mehrere elastische Dichtschläuche auf, die mit einem oder mehreren Anschlusskörpern verbunden sind.

Der Eintrag des flüssigen Polyurethans löst ferner im geschlossenen Formwerkzeug eine chemische Reaktion aus, bei der Gas austritt. Kann dieses nicht entweichen, entstehen Gasblasen. Diese Gasblasen können sich negativ auf die Bauteilqualität auswirken.

In der EP 2 907 643 A1 wird eine Dichteinrichtung beschrieben, bei der neben einem aufblähbaren Schlauch ferner ein aufblähbarer Anschlusskörper vorgesehen wird. Sowohl der Dichtschlauch als auch der Anschlusskörper sind in jeweiligen Vertiefungen des Formwerkzeugs eingelegt.

Um eine solche Dichteinrichtung zu aktivieren, werden die Dichtschläuche mit Druckluft beaufschlagt. Dadurch bläht sich der entsprechende Dichtschlauch auf und stellt somit einen Dichtbereich zur gegenüberliegenden Formwerkzeughälfte bereit.

Zwar haben sich die mit Druckluft zu beaufschlagenden Dichtschläuche in der Praxis als äußert vorteilhaft erwiesen. Allerdings muss beim Betrieb einer solchen Dichteinrichtung oder eines eine solche Dichteinrichtung aufweisenden Formwerkzeugs sichergestellt werden, dass die Druckluft im entsprechenden Dichtschlauch gehalten werden kann. Beispielsweise können bei einem solchen Dichtschlauch im Laufe der Lebensdauer Risse auftreten, sodass eine verminderte oder gänzlich ausbleibende Dichtwirkung die Folge ist.

Ist die Dichtwirkung reduziert oder gemindert, sollte sichergestellt werden, dass die defekte Dichteinrichtung möglichst zeitnah ausgetauscht wird. Obwohl das reduzierte Druckniveau ein entsprechender Indikator ist, kann es sein, dass dies vom Bediener missachtet oder falsch interpretiert wird. Die Folge ist, dass trotz einer defekten oder nicht voll funktionstüchtigen Dichteinrichtung weiter produziert wird.

Ferner ist die US 2002/168438 A1 bekannt, die eine Vorrichtung zum Herrichten einer Linse offenbart.

### Gegenstand der Erfindung

Die Erfindung zielt darauf ab, die Qualitätssicherung weiter zu steigern und Ausschuss zu vermeiden.

Der Gegenstand des Anspruchs 1 stellt für die genannte Aufgabe eine Lösung bereit. Weitere bevorzugte Ausführungsformen sind in den abhängigen Ansprüchen ausgeführt. Ferner betrifft die vorliegende Erfindung ein Formwerkzeug, das ein Dichtungssystem zum Abdichten zweier Formwerkzeughälften umfasst.

Der vorliegenden Erfindung liegt der Gedanke zu Grunde, den Bediener eines Werkzeugs, insbesondere Formwerkzeuges, dahingehend zu unterstützen, dass dieser möglichst zeitnah eine defekte oder nicht vollständig funktionstüchtige Dichteinrichtung erkennt, um entsprechende Gegenmaßnahmen einleiten zu können. Dies kann beispielsweise bedeuten, dass die Dichteinrichtung ausgetauscht wird. Dabei zielt die vorliegende Erfindung insbesondere darauf ab, dem Bediener des Werkzeugs, insbesondere visuell, eine defekte Dichteinrichtung anzuzeigen. Ferner kann dem Bediener, insbesondere visuell, eine intakte Dichteinrichtung angezeigt werden.

Das erfindungsgemäße Dichtungssystem weist auf: eine Dichteinrichtung zum Abdichten benachbarter Maschinenteile, insbesondere Formwerkzeugteile, eine Lichtausgabeeinrichtung, die derart angeordnet ist, dass die Lichtausgabeeinrichtung einen Abschnitt der Dichteinrichtung beleuchten kann.

Das erfindungsgemäße Dichtungssystem hat den Vorteil, dass der Bediener direkt an der Dichtungseinrichtung selbst erkennt, ob diese einsatzbereit ist, oder ob ggf. ein Defekt vorliegt. Beleuchten bedeutet dabei, einen Abschnitt der Dichteinrichtung mit Licht anzustrahlen, insbesondere mit Licht einer bestimmten Farbe, wie rot oder grün. Da der Bediener dies direkt wahrnehmen kann, insbesondere bevor der Bediener eine Formhaut in ein Formwerkzeug einlegt oder eine andere Tätigkeit an einem das Dichtungssystem aufweisenden Werkzeug durchführt, wird verhindert, dass die Fertigung fortgeführt wird. Folglich kann die Ausschussrate deutlich reduziert werden, da der Austausch einer Dichteinrichtung deutlich früher durchgeführt wird, damit der Defekt unmittelbar erkannt werden kann.

Gemäß einer bevorzugten Ausführungsform weist die Dichtungseinrichtung einen aufblähbaren Dichtschlauch auf.

"Aufblähbar" meint eine Materialeigenschaft, wonach das entsprechende Element durch eine Druckbeaufschlagung von innen elastisch ausdehnbar ist. Auf diese Weise vergrößert der Dichtschlauch seinen Umfang.

Beispielsweise kann der Dichtschlauch aus Silikon gefertigt sein. Ein Silikon-Dichtschlauch hat den Vorteil, dass dieser eine geringere Schaumhaftung aufweist, und somit besonders für eine Abdichtung eines Formwerkzeuges zum Hinterschäumen geeignet ist.

Ferner kann die Dichteinrichtung einen Anschlusskörper aufweisen, wobei bevorzugt ist, dass der Anschlusskörper aufblähbar ist. Der Anschlusskörper kann dabei eine Verbindung einer Druckluftzufuhr zu einem Dichtschlauch herstellen. Auch der Anschlusskörper kann aus Silikon gefertigt sein und damit die bereits genannten Vorteile verwirklichen.

Gemäß einer Ausführungsform ist die Lichtausgabeeinrichtung derart angeordnet, dass die Lichtausgabeeinrichtung den Anschlusskörper beleuchten kann. Beispielsweise kann die Lichtausgabeeinrichtung, in einer Draufsicht auf eine an einem Formwerkzeug angebrachte Dichteinrichtung, unterhalb des Anschlusskörpers vorgesehen sein.

Es ist bevorzugt, dass die Dichteinrichtung zumindest abschnittsweise aus einem transparenten oder teiltransparenten Material gefertigt ist. Somit leuchtet der entsprechende Abschnitt, beispielsweise der Anschlusskörper, in der von der Lichtausgabeeinrichtung ausgegebenen Farbe.

Gemäß einer alternativen Ausführungsform ist die Dichteinrichtung aus einem nicht-transparenten Material gefertigt. In diesem Fall führt das Beleuchten der Dichteinrichtung zu einer Lichtreflexion an einer oder mehreren Oberflächen der Dichteinrichtung. Das von der Dichteinrichtung reflektierte Licht kann entsprechend wahrgenommen werden. Auch in diesem Fall leuchtet der entsprechende Abschnitt, beispielsweise der Anschlusskörper, in der von der Lichtausgabeeinrichtung ausgegebenen Farbe.

Gemäß einer Variante der Erfindung ist die Lichtausgabeeinrichtung eingerichtet, unterschiedliche Beleuchtungsfarben auszugeben. Beispielsweise wird eine grüne Farbe ausgegeben, um eine intakte Dichteinrichtung zu kennzeichnen, während eine rote Farbe ausgegeben wird, um eine defekte Dichteinrichtung zu kennzeichnen. Somit können mehrere Funktionen in einem Dichtungssystem integriert werden.

Beispielsweise kann die Lichtausgabeeinrichtung eine LED-Leuchte, eine OLED-Leuchte oder ein Lichtwellenleiter, insbesondere ein Polycarbonat-Lichtwellenleiter, sein. Im Falle einer LED-Leuchte oder einer OLED-Leuchte handelt es sich um ein aktives Leuchtelement. Ein Lichtwellenleiter hingegen dient dazu, Licht einer ggf. externen Leuchte an einen Ausgabebereich des Lichtwellenleiters zu führen.

Es ist bevorzugt, dass das Dichtungssystem ferner umfasst: einen Drucksensor zum Erfassen eines Innendrucks der Dichteinrichtung, und eine Steuereinrichtung, die eingerichtet ist, die Lichtausgabeeinrichtung basierend auf dem Erfassungsergebnis des Drucksensors anzusteuern. Somit kann die Qualitätssicherungsfunktion deutlich gesteigert werden.

Gemäß einem weiteren Aspekt der Erfindung wird ein Formwerkzeug bereitgestellt, welches ein Dichtungssystem gemäß einer der zuvor genannten Ausführungsformen umfassen kann.

Das Formwerkzeug, das insbesondere ein Formwerkzeug zum Ausbilden von Schaumformteilen ist, umfasst: Formwerkzeugteile, die zum Ausbilden eines Formhohlraums aufeinander zu bewegbar sind, wobei es sich bevorzugt um zwei gegenüberliegende Formwerkzeugteile handelt, eine Dichteinrichtung zum Abdichten der Formwerkzeugteile, und eine Lichtausgabeeinrichtung, die zumindest abschnittsweise in dem die Dichteinrichtung aufnehmenden Formwerkzeugteil derart angeordnet ist, dass die Lichtausgabeeinrichtung einen Abschnitt der Dichteinrichtung beleuchten kann.

Es ist bevorzugt, dass die Dichteinrichtung einen aufblähbaren Dichtschlauch umfasst, wobei bevorzugt ist, dass der Dichtschlauch zumindest abschnittsweise in einer Nut zumindest des Formwerkzeugteils eingelegt ist. Beispielsweise taucht der Dichtschlauch im nicht aufgeblähten Zustand vollständig oder überwiegend in die Nut ein. Im aufgeblähten Zustand kann sich der Dichtschlauch teilweise außerhalb der Nut heraus erstrecken.

Ferner kann die Dichteinrichtung einen, insbesondere aufblähbaren, Anschlusskörper aufweisen, der zumindest abschnittsweise in eine Ausnehmung zumindest eines der Formwerkzeugteile eingelegt oder eingebracht ist. Der Anschlusskörper kann beispielsweise im nicht aufgeblähten Zustand vollständig oder überwiegend in der Ausnehmung aufgenommen werden. Im aufgeblähten Zustand kann sich der Anschlusskörper teilweise außerhalb der Ausnehmung erstrecken.

Die Lichtausgabeeinrichtung kann eingerichtet sein, mehrere unterschiedliche Beleuchtungsfarben auszugeben, wobei bevorzugt ist, dass die Lichtausgabeeinrichtung eine LED-Leuchte, eine OLED-Leuchte oder ein Lichtwellenleiter, insbesondere eine Polycarbonat-Lichtwellenleiter, ist.

Ferner ist bevorzugt, dass das Formwerkzeug einen Drucksensor zum Erfassen eines Drucks der Dichteinrichtung aufweist, und ferner eine Steuereinrichtung vorgesehen ist, die eingerichtet ist, die Lichtausgabeeinrichtung basierend auf dem Erfassungsergebnis des Drucksensors anzusteuern. Beispielsweise kann die Steuereinrichtung eine Maschinenhauptsteuerung sein.

In einer weiteren Ausführungsform wird eine Verwendung einer Lichtausgabeeinrichtung zur Beleuchtung einer Dichteinrichtung bereitgestellt, wobei die Dichteinrichtung zum Abdichten benachbarter Maschinenteile, insbesondere Formwerkzeugteile, verwendet wird.

Im Rahmen der genannten Verwendung kann/können eine Lichtausgabeeinrichtung und/oder eine Dichteinrichtung gemäß einem der zuvor genannten Aspekte zum Einsatz kommen.

Dabei ist es besonders bevorzugt, dass die Dichteinrichtung einen aufblähbaren Dichtschlauch und/oder einen, insbesondere aufblähbaren, Anschlussköper aufweist, der und/oder die aus einem transparenten oder teiltransparenten Material, beispielsweise einem Silikonmaterial, gefertigt ist/sind.

Ein Verfahren, bei dem beispielsweise ein Dichtungssystem gemäß einem der vorangegangen Aspekte oder ein Formwerkzeug gemäß einem der vorangegangen Aspekte zum Einsatz kommt, kann die folgenden Schritte umfassen:
- Aufbringen eines Drucks an einer, insbesondere aufblähbaren, Dichteinrichtung,
- Ermitteln eines Drucks der Dichteinrichtung,
- Ansteuern einer einen Abschnitt der Dichteinrichtung anleuchtenden Lichtausgabeeinrichtung, falls der ermittelte Druck ein bestimmtes Druckniveau unterschreitet.

Dabei ist es bevorzugt, dass beim Ansteuern der Lichtausgabeeinrichtung eine Änderung der von der Lichtausgabeeinrichtung ausgegebenen Farbe bedingt wird.

### Kurze Beschreibung der Zeichnungen

Anhand der Figuren sowie der nachfolgenden Beschreibung soll die Erfindung anhand eines Beispiels weiter erläutert werden.
- Fig. 1: zeigt ein Dichtungssystem gemäß einer Ausführungsform der vorliegenden Erfindung anhand eines Beispiels.
- Fig. 2: zeigt eine perspektivische Detailansicht im Bereich A aus Figur 1, wobei die Dichteinrichtung weggelassen wurde.
- Fig. 3: zeigt eine Schnittansicht B-B von Fig. 1.

### Detaillierte Beschreibung der bevorzugten Ausführungsform

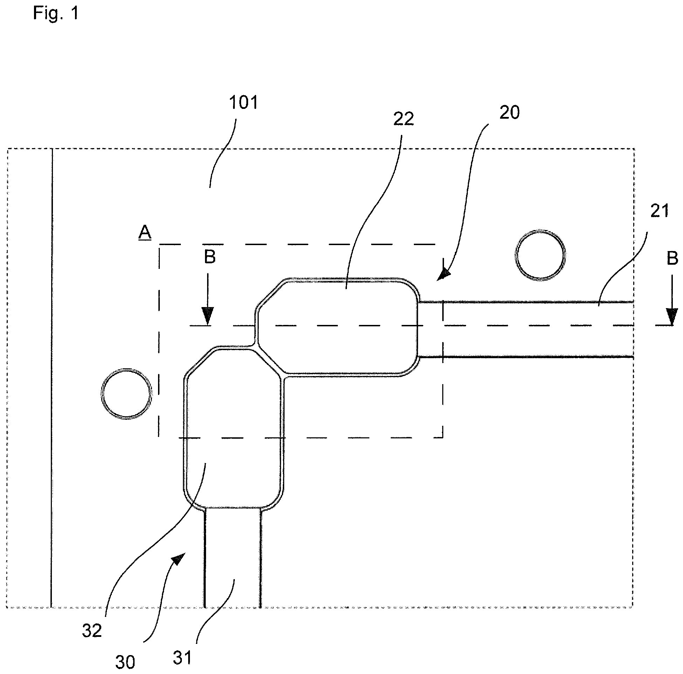

Anhand der in Fig. 1 dargestellten Vorrichtung wird ein Dichtungssystem gemäß der vorliegenden Erfindung anhand eines Beispiels beschrieben. Weitere in diesem Zusammenhang erwähnte Modifikationen bestimmter Einzelmerkmale können jeweils einzeln miteinander kombiniert werden, um weitere Ausführungsformen auszubilden. Auch können bestimmte Einzelmerkmale der beschriebenen Ausführungsformen sowie Modifikationen hiervon jeweils einzeln in die Ansprüche integriert werden, um weitere Ausführungsformen der Erfindung auszubilden.

Fig. 1 zeigt eine Draufsicht einer Formwerkzeughälfte 101 eines Formwerkzeuges, das zum Schäumen von Fahrzeugteilen verwendet wird. Die vorliegende Ausführungsform ist jedoch nicht auf den Automobilbereich beschränkt. Ferner können auch Bauteile für den Luftfahrtbereich, für Züge, für Boote, usw. mit einem solchen Formwerkzeug hergestellt werden.

Das Dichtungssystem in Figur 1 umfasst eine erste Dichteinrichtung 20, die einen aufblähbaren Dichtschlauch 21 sowie einen Anschlusskörper 22 umfasst. Ferner weist das Dichtungssystem eine zweite Dichteinrichtung 30 auf, die einen aufblähbaren Dichtschlauch 31 sowie einen Anschlusskörper 32 umfasst. Im Ausführungsbeispiel gemäß Figur 1 sind die Anschlusskörper 22, 32 der ersten und zweiten Dichteinrichtung 20 benachbart zueinander angeordnet.

Die erste und zweite Dichteinrichtung 20, 30 ist jeweils in einer Vertiefung des Formwerkzeugteils 101 aufgenommen. Insbesondere ist der Dichtschlauch 21 der ersten Dichteinrichtung 20 in einer Nut im Formwerkzeugteil 101 aufgenommen, und der Anschlusskörper 22 der ersten Dichteinrichtung 20 ist in einer Ausnehmung des Formwerkzeugteils 101 aufgenommen. Entsprechendes gilt für die zweite Dichteinrichtung 30.

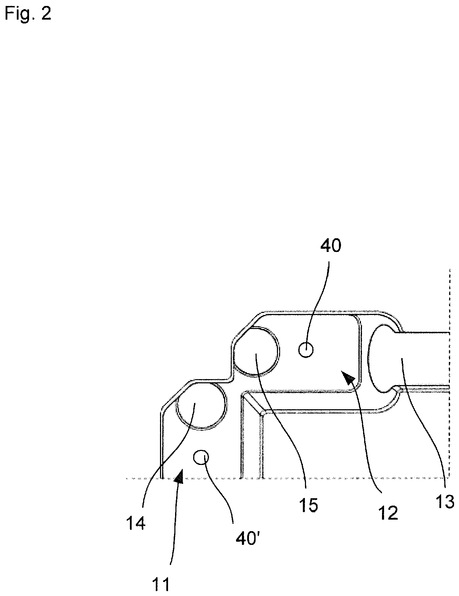

In Figur 2 ist eine Detailansicht (Bereich A) des in Figur 1 dargestellten Formwerkzeugteils 101 dargestellt, wobei in Figur 2 die Dichteinrichtungen 20, 30 weggelassen wurden.

Somit zeigt Figur 2 eine Ausnehmung 11 sowie eine Ausnehmung 12, wobei sich ausgehend von Ausnehmung 12 eine Nut 13 erstreckt. Mit den Ausnehmungen 11, 12 soll eine Aufnahmemöglichkeit für einen Anschlusskörper veranschaulicht werden. Die Nut 13 veranschaulicht eine Aufnahmemöglichkeit für einen aufblähbaren Dichtschlauch, der mit einem Anschlusskörper verbunden ist.

Die Ausnehmung 11 ist zur Aufnahme des Anschlusskörpers 22, und die Ausnehmung 12 ist zur Aufnahme des Anschlusskörpers 32 ausgelegt, während in der Nut 13 der Dichtschlauch 21 geführt wird.

Im vorliegenden Ausführungsbeispiel sind die Anschlusskörper 22, 32 im Wesentlichen gleich dimensioniert. In anderen Ausführungsbeispielen können sich Anschlusskörper an einem Formwerkzeugteil unterscheiden.

In den Ausnehmungen 11, 12 sind jeweils Bohrungen 14, 15 vorgesehen, durch die Druckluft in die jeweiligen Anschlusskörper 22, 32 eingeführt werden kann.

Ferner befindet sich, in der Draufsicht betrachtet, an der Bodenseite der jeweiligen Ausnehmung 11, 12 eine Öffnung, in die jeweils eine Lichtausgabeeinrichtung 40, 40' eingelassen ist. Befindet sich ein Anschlusskörper in der jeweiligen Ausnehmung 11, 12, so wird die Lichtausgabeeinrichtung 40, 40' durch den Anschlusskörper verdeckt.

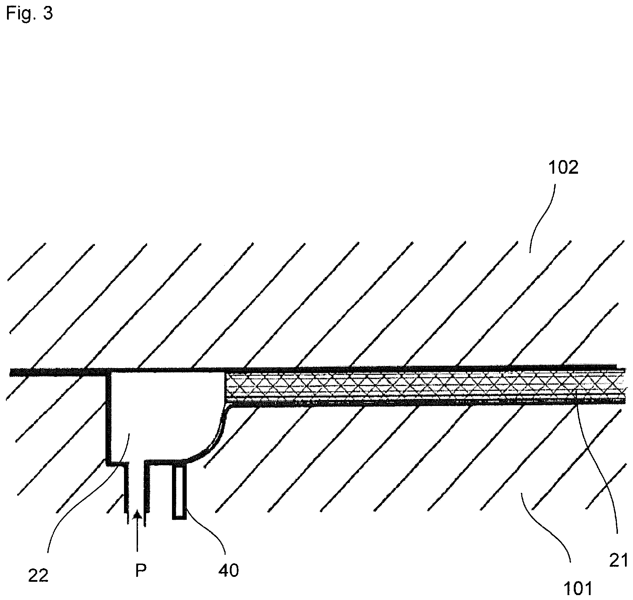

Figur 3 ist eine schematische Schnittansicht entlang der Linie B-B in Figur 1. Es ist ersichtlich, dass der Dichtschlauch 21 in einer Nut des Formwerkzeugteils 101 und der Anschlusskörper 22 in eine Ausnehmung des Formwerkzeugteils 101 eingelegt ist. Ferner ist schematisch die Druckluftzufuhr (siehe Bezugszeichen P in Figur 3) zum Anschlusskörper 22 dargestellt.

Im Betrieb wird der Dichtschlauch 21 über den Anschlusskörper 22 mit Druckluft versorgt. Auf diese Weise wird eine Dichtung zwischen den Formwerkzeugteilen 101, 102 hergestellt.

Im Formwerkzeugteil 101, in dem die erste und zweite Dichteinrichtung 20, 30 aufgenommen ist, sind ferner die Lichtausgabeeinrichtungen 40, 40' angeordnet. Die Lichtausgabeeinrichtung 40 ist derart ausgerichtet, dass diese den Anschlusskörper 22 der ersten Dichteinrichtung 20 beleuchten kann. Auch am Anschlusskörper 32 der zweiten Dichteinrichtung 30 ist eine Lichtausgabeeinrichtung 40' vorgesehen.

Nachfolgend wird lediglich der Betrieb der Lichtausgabeeinrichtung 40 beschrieben. Die Lichtausgabeeinrichtung 40' für die zweite Dichteinrichtung 30 hat jedoch gleiche oder ähnliche Funktionen.

Im Normalbetrieb wird der Anschlusskörper 22 von der Lichtausgabeeinrichtung 40 mit einem grünen Licht angestrahlt. Da der Anschlusskörper 22 aus einem transparenten oder teiltransparenten Material gefertigt ist, beispielsweise aus einem Silikonmaterial, leuchtet der Anschlusskörper 22 in grüner Farbe.

Im Formwerkzeugteil 101 oder an der Druckluftzufuhr ist ferner ein Drucksensor (nicht dargestellt) angeordnet, mit dem ein Druckzustand der ersten Dichteinrichtung 20 erfasst werden kann. Ein entsprechender Drucksensor ist auch für die zweite Dichteinrichtung 30 vorgesehen, und/oder ein Drucksensor kann nacheinander unterschiedliche Dichtkreise zeitversetzt überprüfen.

Sollte der Drucksensor vermitteln, dass an der ersten Druckeinrichtung 20 trotz Druckbeauftragung kein ausreichendes Druckniveau erreicht wird, so steuert eine Steuereinrichtung (nicht dargestellt) die Lichtausgabeeinrichtung 40 derart, dass die ausgegebene Farbe geändert wird. Beispielsweise wird der Anschlusskörper in roter Farbe angestrahlt. Somit leuchtet der Anschlusskörper in diesem Fall rot.

Der Bediener kann bei geöffnetem Formwerkzeug somit sofort erkennen, ob sich die Dichteinrichtung in einem Zustand befindet, in dem ein gewisses Druckniveau erreicht werden kann. Sollte dieses Druckniveau nicht erreicht werden, liegt ein Defekt an der Dichteinrichtung vor.

Beispielsweise kann ein Defekt auftreten, wenn der Dichtschlauch 21 oder der Anschlusskörper 22 spröde werden, oder der Verbindungsbereich zwischen dem Anschlusskörper und dem Dichtschlauch undicht ist, und/oder durch Materialermüdung oder Beschädigung von außen, die Dichtwirkung nachlässt.

Der Bediener kann bei geöffnetem Formwerkzeug somit unmittelbar erkennen, dass eine bestimmte Dichteinrichtung defekt ist und kann anhand der als defekt visualisierten Dichteinrichtung einen Austausch dieser vornehmen. Bei diesem Austausch verbleibt die Lichtausgabeeinrichtung im Formwerkzeugteil.

In der vorliegenden Ausführungsform ist die Lichtausgabeeinrichtung 40 eine LED-Leuchte. LED-Leuchten haben sich als kompakt und gleichzeitig als äußerst robust erwiesen, sodass diese für den Einsatz in einem Formwerkzeug zum Hinterschäumen von Bauteilen besonders geeignet sind.

Darüber hinaus können mit einer LED-Leuchte Farbwechsel realisiert werden, so dass die LED-Leuchte im vorliegenden Ausführungsbeispiel von einer grünen Farbe auf eine rote Farbe wechselt, wenn ein Defekt der ihr zugeordneten Dichteinrichtung ermittelt wird.

Mit der in diesem Ausführungsbeispiel dargestellten Visualisierung einer defekten Dichteinrichtung kann somit sowohl ein Defekt direkt einer entsprechenden Dichteinrichtung zugeordnet werden. Ferner weiß der Bediener bei einer grünen Farbanzeige bei allen Dichteinrichtungen, dass auch alle Dichteinrichtungen ordnungsgemäß funktionieren.

Der Bediener kann somit nicht nur den Defekt erkennen, sondern auch zielgerichtet feststellen, welche Dichteinrichtung im Falle eines Defekts auszutauschen ist. Dies ist gerade dann vorteilhaft, wenn ein entsprechendes Formwerkzeug eine Vielzahl von Dichteinrichtung aufweist, wie dies bei Formwerkzeugen der Fall ist, die zum Hinterschäumen von Bauteilen verwendet werden.

Obwohl im Rahmen der vorliegenden Ausführungsform ein aufblähbarer Anschlusskörper beschrieben wurde, ist ersichtlich, dass die vorliegende Erfindung auch bei einer Dichteinrichtung mit starrem Anschlusskörper zum Einsatz kommen kann.

Gemäß einer weiteren Modifikation sind der Anschlusskörper und der Dichtschlauch einstückig ausgebildet.

## Patentansprüche

1. Dichtungssystem, aufweisend:
eine Dichteinrichtung (20; 30) zum Abdichten benachbarter Maschinenteile, insbesondere Formwerkzeugteile, **dadurch gekennzeichnet, dass** das Dichtungssystem
eine Lichtausgabeeinrichtung (40) aufweist, die derart angeordnet ist, dass die Lichtausgabeeinrichtung einen Abschnitt der Dichteinrichtung (20; 30) beleuchten kann.

2. Dichtungssystem gemäß Anspruch 1, **dadurch gekennzeichnet, dass** die Dichtungseinrichtung (20; 30) einen aufblähbaren Dichtschlauch (21; 31) aufweist.

3. Dichtungssystem gemäß einem der vorangegangenen Ansprüche, **dadurch gekennzeichnet, dass** die Dichtungseinrichtung (20; 30) einen Anschlusskörper (22; 32) aufweist, wobei bevorzugt ist, dass der Anschlusskörper (22; 32) aufblähbar ist.

4. Dichtungssystem gemäß Anspruch 3, **dadurch gekennzeichnet, dass** die Lichtausgabeeinrichtung derart angeordnet ist, dass die Lichtausgabeeinrichtung den Anschlusskörper (22; 32) beleuchten kann.

5. Dichtungssystem gemäß einem der vorangegangenen Ansprüche, **dadurch gekennzeichnet, dass** die Dichteinrichtung (20; 30) zumindest abschnittsweise aus einem transparenten oder teiltransparenten Material gefertigt ist.

6. Dichtungssystem gemäß einem der vorangegangenen Ansprüche, **dadurch gekennzeichnet, dass** die Lichtausgabeeinrichtung (40) eingerichtet ist, unterschiedliche Beleuchtungsfarben auszugeben.

7. Dichtungssystem gemäß einem der vorangegangenen Ansprüche, **dadurch gekennzeichnet, dass** die Lichtausgabeeinrichtung (40) eine LED-Leuchte, eine OLED-Leuchte oder ein Lichtwellenleiter, insbesondere ein Polycarbonat-Lichtwellenleiter, ist.

8. Dichtungssystem gemäß einem der vorangegangenen Ansprüche, **dadurch gekennzeichnet, dass** das Dichtungssystem ferner umfasst:
Einen Drucksensor zum Erfassen eines Drucks der Dichteinrichtung,
eine Steuereinrichtung, die eingerichtet ist, die Lichtausgabeeinrichtung basierend auf dem Erfassungsergebnis des Drucksensors anzusteuern.

9. Formwerkzeug, aufweisend:
Formwerkzeugteile (101, 102), die zum Ausbilden eines Formhohlraums aufeinander zu bewegbar sind,
eine Dichteinrichtung (20; 30) zum Abdichten der Formwerkzeugteile,
**dadurch gekennzeichnet, dass** das Formwerkzeug
eine Lichtausgabeeinrichtung aufweist, die zumindest abschnittsweise in dem die Dichteinrichtung aufnehmenden Formwerkzeugteil (101) derart angeordnet ist, dass die Lichtausgabeeinrichtung einen Abschnitt der Dichteinrichtung (20; 30) beleuchten kann.

10. Formwerkzeug gemäß Anspruch 9, **dadurch gekennzeichnet, dass** die Dichteinrichtung (20; 30) einen aufblähbaren Dichtschlauch (21; 31) umfasst, wobei bevorzugt ist, dass der Dichtschlauch (21; 31) zumindest abschnittsweise in einer Nut zumindest des Formwerkzeugteils (101) eingelegt ist.

11. Formwerkzeug gemäß einem der Ansprüche 9-10, **dadurch gekennzeichnet, dass** die Dichteinrichtung (20; 30) einen, insbesondere aufblähbaren, Anschlusskörper (22; 32) aufweist, der zumindest abschnittsweise in eine Ausnehmung zumindest eines der Formwerkzeugteile (101) eingelegt ist.

12. Formwerkzeug gemäß Anspruch 11, **dadurch gekennzeichnet, dass** das Formwerkzeugteil (101) ausgehend von der Ausnehmung eine Öffnung aufweist, wobei die Lichtausgabeeinrichtung (40) in der Öffnung aufgenommen wird.

13. Formwerkzeug gemäß einem der Ansprüche 9-12, **dadurch gekennzeichnet, dass** die Lichtausgabeeinrichtung (40) eingerichtet ist, mehrere unterschiedliche Beleuchtungsfarben auszugeben, wobei bevorzugt ist, dass die Lichtausgabeeinrichtung (40) eine LED-Leuchte, eine OLED-Leuchte oder ein Lichtwellenleiter, insbesondere ein Polycarbonat-Lichtwellenleiter, ist.

14. Formwerkzeug gemäß einem der Ansprüche 9-13, **dadurch gekennzeichnet, dass** das Formwerkzeug ferner aufweist:
einen Drucksensor zum Erfassen eines Innendrucks der Dichteinrichtung,
eine Steuereinrichtung, die eingerichtet ist, die Lichtausgabeeinrichtung (40) basierend auf dem Erfassungsergebnis des Drucksensors anzusteuern.

15. Verwendung einer Lichtausgabeeinrichtung (40) zur Beleuchtung einer Dichteinrichtung (20; 30), wobei die Dichteinrichtung (20; 30) zum Abdichten benachbarter Maschinenteile, insbesondere Formwerkzeugteile (101, 102), verwendet wird.

## Claims

1. Sealing system, comprising:
a sealing device (20; 30) for sealing adjacent machine parts, in particular moulding tool parts, **characterised in that** the sealing system has a light-emitting device (40) which is arranged in such a way that the light-emitting device can illuminate a section of the sealing device (20; 30) .

2. Sealing system according to claim 1, **characterised in that** the sealing device (20; 30) has an inflatable seal hose (21; 31).

3. Sealing system according to one of the preceding claims, **characterised in that** the sealing device (20; 30) has a connecting body (22; 32), wherein it is preferred if the connecting body (22; 32) is inflatable.

4. Sealing system according to claim 3, **characterised in that** the light-emitting device is arranged in such a way that the light-emitting device can illuminate the connecting body (22; 32).

5. Sealing system according to one of the preceding claims, **characterised in that** the sealing device (20; 30) is at least partially made of a transparent or partially transparent material.

6. Sealing system according to one of the preceding claims, **characterised in that** the light-emitting device (40) is configured to emit different illumination colours.

7. Sealing system according to one of the preceding claims, **characterised in that** the light-emitting device(40) is an LED luminaire, an OLED luminaire or an optical waveguide, in particular a polycarbonate optical waveguide.

8. Sealing system according to one of the preceding claims, **characterised in that** the sealing system further comprises:
a pressure sensor for sensing a pressure of the sealing device
a control device which is configured to control the light-emitting device based on the sensing result of the pressure sensor.

9. Moulding tool, comprising:
moulding tool parts (101, 102) which can be moved towards each other to form a mould cavity,
a sealing device (20; 30) for sealing the moulding tool parts, **characterised in that** the moulding tool
has a light-emitting device which is arranged at least partially in the moulding tool part (101) receiving the sealing device in such a way that the light-emitting device can illuminate a section of the sealing device (20; 30).

10. Moulding tool according to claim 9, **characterised in that** the sealing device (20; 30) comprises an inflatable seal hose (21; 31), wherein it is preferred if the seal hose (21; 31) is inserted at least partially in a groove of at least the moulding tool part (101).

11. Moulding tool according to one of the claims 9-10, **characterised in that** the sealing device (20; 30) has an in particular inflatable connecting body (22;32) which is inserted at least partially in a recess in at least one of the moulding tool parts (101).

12. Moulding tool according to claim 11, **characterised in that** the moulding tool part (101) has an opening starting from the recess, wherein the light-emitting device (40) is housed in the opening.

13. Moulding tool according to one of the claims 9-12, **characterised in that** the light-emitting device (40) is configured to emit several different illumination colours, wherein it is preferred if the light-emitting device (40) is an LED luminaire, an OLED luminaire or an optical waveguide, in particular a polycarbonate optical waveguide.

14. Moulding tool according to one of the claims 9-13, **characterised in that** the moulding tool also has:
a pressure sensor for sensing an internal pressure of the sealing device,
a control device which is configured to control the light-emitting device (40) based on the sensing result of the pressure sensor.

15. Use of a light-emitting device (40) to illuminate a sealing device (20; 30), wherein the sealing device (20; 30) is used to seal adjacent machine parts, in particular moulding tool parts (101, 102).

## Revendications

1. Système d'étanchéité, présentant :
un dispositif d'étanchéité (20 ; 30) pour étanchéifier des pièces de machine voisines, en particulier des pièces d'outil de moulage, **caractérisé en ce que** le système d'étanchéité
présente un dispositif d'émission de lumière (40) qui est agencé de sorte que le dispositif d'émission de lumière peut éclairer une section du dispositif d'étanchéité (20 ; 30).

2. Système d'étanchéité selon la revendication 1, **caractérisé en ce que** le dispositif d'étanchéité (20 ; 30) présente un tuyau d'étanchéité gonflable (21; 31).

3. Système d'étanchéité selon l'une des revendications précédentes, **caractérisé en ce que** le dispositif d'étanchéité (20 ; 30) présente un corps de raccordement (22 ; 32), dans lequel le corps de raccordement (22 ; 32) est de préférence gonflable.

4. Système d'étanchéité selon la revendication 3, **caractérisé en ce que** le dispositif d'émission de lumière est agencé de telle manière que le dispositif d'émission de lumière peut éclairer le corps de raccordement (22 ; 32).

5. Système d'étanchéité selon l'une des revendications précédentes, **caractérisé en ce que** le dispositif d'étanchéité (20; 30) est réalisé au moins par sections en un matériau transparent ou partiellement transparent.

6. Système d'étanchéité selon l'une des revendications précédentes, **caractérisé en ce que** le dispositif d'émission de lumière (40) est conçu pour émettre des couleurs d'éclairage différentes.

7. Système d'étanchéité selon l'une des revendications précédentes, **caractérisé en ce que** le dispositif d'émission de lumière (40) est une lampe DEL, une lampe ODEL ou un guide d'ondes optiques, en particulier un guide d'ondes optiques en polycarbonate.

8. Système d'étanchéité selon l'une des revendications précédentes, **caractérisé en ce que** le système d'étanchéité comprend en outre :
un capteur de pression pour détecter une pression du dispositif d'étanchéité,
un dispositif de commande qui est conçu pour piloter le dispositif d'émission de lumière sur la base du résultat de détection du capteur de pression.

9. Outil de moulage, présentant :
des parties d'outil de moulage (101, 102) qui peuvent être rapprochées l'une de l'autre pour former une cavité d'outil de moulage,
un dispositif d'étanchéité (20 ; 30) pour étanchéifier les parties d'outil de moulage,
**caractérisé en ce que** l'outil de moulage
présente un dispositif d'émission de lumière qui est agencé au moins par sections dans la partie d'outil de moulage (101) recevant le dispositif d'étanchéité, de telle manière que le dispositif d'émission de lumière peut éclairer une section du dispositif d'étanchéité (20 ; 30).

10. Outil de moulage selon la revendication 9, **caractérisé en ce que** le dispositif d'étanchéité (20 ; 30) comprend un tube d'étanchéité gonflable (21 ; 31), dans lequel de préférence le tube d'étanchéité (21 ; 31) est inséré au moins par sections dans une rainure d'au moins la partie d'outil de moulage (101).

11. Outil de moulage selon l'une des revendications 9-10, **caractérisé en ce que** le dispositif d'étanchéité (20 ; 30) présente un corps de raccordement (22 ; 32), en particulier gonflable, qui est inséré au moins par sections dans une cavité d'au moins l'une des parties d'outil de moulage (101).

12. Outil de moulage selon la revendication 11, **caractérisé en ce que** la partie d'outil de moulage (101) présente une ouverture partant de la cavité, dans lequel le dispositif d'émission de lumière (40) est reçu dans l'ouverture.

13. Outil de moulage selon l'une des revendications 9-12, **caractérisé en ce que** le dispositif d'émission de lumière (40) est conçu pour produire plusieurs couleurs d'éclairage différentes, dans lequel de préférence **en ce que** le dispositif d'émission de lumière (40) est une lampe DEL, une lampe ODEL ou un guide d'ondes optiques, en particulier un guide d'ondes optiques en polycarbonate.

14. Outil de moulage selon l'une quelconque des revendications 9-13, **caractérisé en ce que** le outil de moulage présente en outre :
un capteur de pression pour détecter une pression interne du dispositif d'étanchéité,
un dispositif de commande qui est conçu pour commander le dispositif d'émission de lumière (40) sur la base du résultat de détection du capteur de pression.

15. Utilisation d'un dispositif d'émission de lumière (40) pour éclairer un dispositif d'étanchéité (20 ; 30), dans laquelle le dispositif d'étanchéité (20 ; 30) est utilisé pour étanchéifier des pièces de machine voisines, en particulier des pièces d'outil de moulage (101, 102).
